# EUROPEAN PATENT SPECIFICATION

(11) **EP 2 964 414 B1**
(45) Date of publication and mention of the grant of the patent: **26.12.2018**
(21) Application number: 14719077.1
(22) Date of filing: 05.03.2014
(51) Int. Cl.: B23D 33/00, B21D 43/28, B23D 36/00

(54) **METHOD AND APPARATUS FOR CUTTING BARS**
VERFAHREN UND VORRICHTUNG ZUM SCHNEIDEN VON STANGEN
PROCÉDÉ ET APPAREIL POUR COUPER DES BARRES

(30) Priority: 06.03.2013 IT BO20130097
(43) Date of publication of application: 13.01.2016
(73) Proprietor: Schnell S.p.A., 61036 Colli al Metauro PU (IT)
(72) Inventor: RUPOLI, Simone, I-61030 Montemaggiore al Metauro (PU) (IT)
(74) Representative: Manzella & Associati
(86) International application number: PCT/IB2014/059467
(87) International publication number: WO 2014/136067

(56) References cited:
- DE-A1- 3 824 119

## Description

### Technical Field

The present invention relates to a method for cutting bars according to the preamble of claim 1, in particular iron rods for reinforced concrete, as well as an apparatus according to the preamble of claim 6. DE 38 24 119 A1 discloses a method according to the preamble of claim 1 and an apparatus according to the preamble of claim 6.

### Background Art

It has been known that, in the field of processing of bars, suitable in particular to the manufacturing of longitudinal reinforcements for reinforced concrete constructions, so called "cut lines" or "cutting benches" which carry out the cutting of the above mentioned bars at a pre-established measure, are used. The cut lines generally provide an automatic or by hand storage of the bar raw materials to be cut, and sometimes a so called "pre-storage", and a feeding path for the metal bars to be cut, made by motorized rolls suitable to transfer the bars in a direction parallel to their respective longitudinal axis towards a cutting device made up of shears of the so called "Cayman" or "Guillotine" type. Before the shears, suitable abutment means are provided for performing a pre-heading of the bars to be cut. In other words, in this step, it is suitable to align the bars which can be very misaligned, with their front ends reciprocally staggered. Therefore, for such purpose, the bars are brought on purpose and vigorously against abutment means, so as to obtain for the same bars a definite position, ad much as possible reciprocally aligned. Downstream of the shears, a so called "measure line" is arranged, made up of a suitable motorized roller conveyor. Also along such measure line, as it happens at the front of the feeding line, suitably abutment means can be arranged suitably spaced from one another, for aligning or re-aligning the bars. Such abutment means can be arranged in an active position of interference or non-interference with the path of the bars. More precisely, abutment means which can be activated at the measure to be obtained are activated for obtaining the desired measure. At this point, the so measured bars are cut by operating the shears.

The bars, that is the row materials, can be automatically cut in portions of different length, corresponding to the different bathes to be produced, according to their final use. Such different portions of bars are then addressed to the possible following work steps, for example to the folding.

The feeding line and the measure line of the machines respectively have a length equal to the maximal length of the bars to be cut, for allowing to process bars of the maximal length existing on the market, usually between 12 and 24 meters. The bars are anyway usually cut in portions of considerably smaller size, for example between 3 and 7 meters, according to the technical custom of a specific Country.

Therefore, for making for example a cutting and folding plant for the bars, it is necessary to arrange in line the storage and feed unit, the measure path for the bars, and the folding station, this latter in line or sometimes side by side with the measure path.

Considering that the minimal length of the bars is of 12 meters, and arranging the involved apparatuses in line from the measuring to the cutting until the folding, the whole plant can have a longitudinal extension not shorter than about 40 meters, that is more than three times the original length of the bars. On the contrary, in case the fold apparatus is arranged side by side with the measure path, the longitudinal extension of the plant can be reduced, but not shorter than about 26 meters, that is anyway more than twice the original length of the bars.

Also for cutting benches, which do not comprise folding apparatuses, it is not possible to reduce the length of the plant, since usually at least the folding bench and the storage should be aligned.

In any case, the installation of a plant for the cutting or for the cutting and folding of bars is very cumbersome and expensive.

Furthermore, it is to be considered that the longitudinal extension of the apparatus has a bearing on the transferring time of the bars, cut and to be cut, and thus extends the time of each cycle in spite of productivity.

### Disclosure

The aim of the present invention is that of solving the cited problems by providing a method which allows to perform in an optimal way the cutting of bars, in particular metal rods for reinforced concrete destined, for example, to a subsequent folding process.

Within such task, it is a further scope of the present invention that of providing a method and an apparatus for cutting bars which allow to reduce the occupied space and the working time of the cut cycle, so as to obtain an increased productivity.

A further scope of the present invention is that of providing an apparatus for cutting bars which allows to carry out such cut method through a structure of simple construction, versatile use as well as relatively economic cost.

The cited scopes are attained according to the present invention by the method for cutting bars, in particular metal rods for reinforced concrete, according to claim 1 as well as by the apparatus for cutting bars according to claim 6.

More precisely, the method for cutting bars provides to feed a determined number of bars to be cut to a support and measure line. The determined number of bars prearranged on the support and measure line is referred with respect to abutment means associated with the same support and measure line. The distance corresponding to the length of bars to be obtained, and therefore the section of bars where the cut should be made, is measured with respect to the above mentioned abutment means. At this point, the method provides to actuate a cutting device mobile relatively to the bars arranged on the support and measure line. In practice, the cutting device is handled along the same bars for intercepting their measured cut sections. Once the cutting device mobile relatively to the bars has been positioned, cutting of the same bars is performed according to the desired measure.

A feature of the invention, thus, consists in prearranging the cutting device mobile along the bars prearranged on the support and measure line, and in handling the same device with respect to the fed bars for intercepting on them the relative cutting section.

The cutting device is mobile through the support framework of the support and measure line, so as to carry out the cutting and a predetermined measuring inside the same support and measure line.

Therefore the method and the apparatus according to the invention allow to compact in an optimal way the space required for the installation of the cutting and possibly folding plant for the bars. In practice, in order to carry out the cutting of the fed bars at respective measure sections, that is in order to obtain the positioning of the cutting device at said sections, it is not necessary to feed bars for a length substantially equal to the length to be obtained. On the contrary, the same cutting device displaces and positions itself at the section to be cut, being mobile according to the invention along the support and measure line, through the support framework of the said line, substantially between one end and the other of the same support and measure line.

Preferably, the support and measure line is placed side by side with the storage, thus reducing the longitudinal space required by the plant. In practice, the bars are transferred in a direction transversal to their own longitudinal axis, from the storage to the support and measure line and, finally, from this latter, after the cutting, to the downstream line. The plant, thus, substantially extends in transversal direction to the longitudinal axis of the bars, therefore it results very compact in longitudinal direction.

Preferably, a folding apparatus is placed as well side by side with the support and measure line, on the opposite side with respect to the storage.

In substance, the cutting and folding plant according to the invention is made up of modules placed side by side to one another, with great saving of space longitudinally to the bars. Therefore, the plant results to be extremely compact for any length of the row materials, providing a consequent proportional reduction of the cycle time for processing the same bars.

### Description of Drawings

Details of the invention shall be more apparent from the detailed description of a preferred embodiment of the apparatus for cutting and possibly folding bars, in particular iron rods, illustrated for indicative purposes in the attached drawings, wherein:
figures 1 and 2 respectively show a plan view and a perspective view of a plant for cutting and folding bars, provided with the cutting device according to the invention;
figures 3 to 10 show a lateral view of the plant shown in figures 1 and 2 in following work steps;
figures 11 to 14 show a lateral view of a portion of the plant shown in figure 1 in following working steps for cutting bars;
figure 15 shows a perspective view of a portion of the apparatus in a functioning step;
figures 16 to 18 show a lateral view of a detail of the apparatus according to the invention in different working configurations;
figure 19 shows a perspective view of the same portion shown in figures 16 to 18 in an unloading working step of the cut bars;
figures 20 and 21 show a perspective view of the same portion of the apparatus according to the invention, according to a different embodiment;
figure 22 shows a lateral view of the portions shown in figures 20 and 21;
figure 23 shows a lateral view of a plant for working bars according to a further embodiment, provided with the same apparatus shown in figure 22;
figures 24 and 25 show a different embodiment of a detail of the apparatus according to the invention.

### Best Mode

With particular reference to such figures, the apparatus for cutting bars 2, in particular iron rods for reinforced concrete, used for example in a plant 10 for cutting and folding bars 2, has been indicated in its entirety with 1.

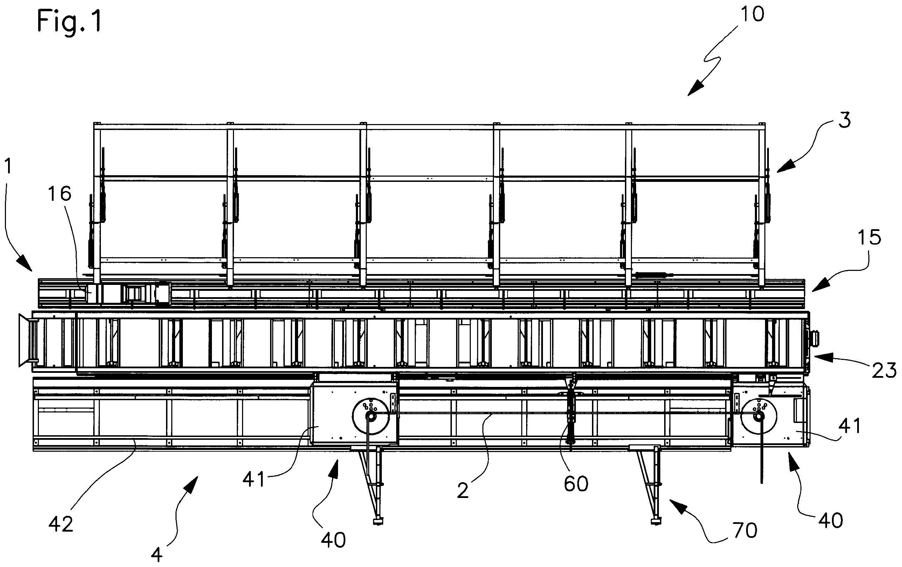

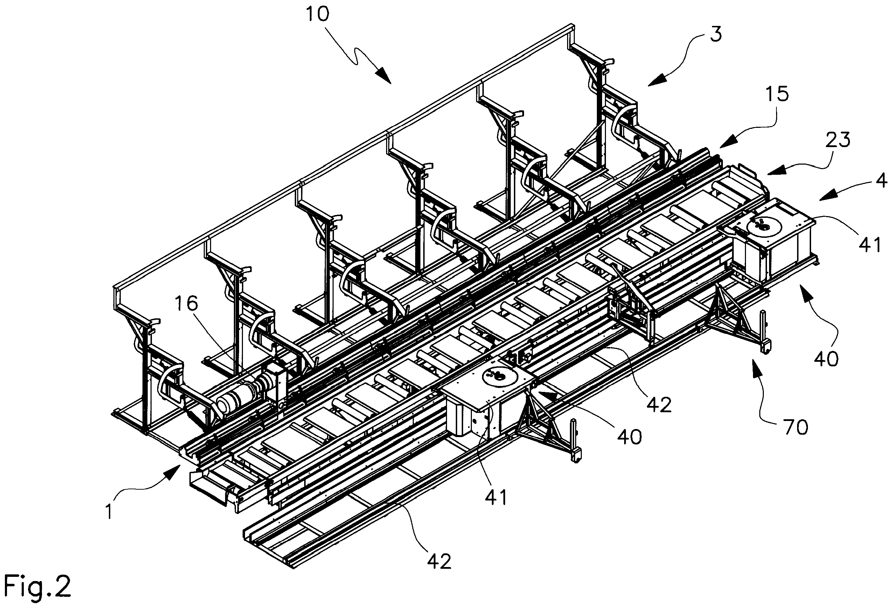

The plant 10 can comprise a storage for the bars 2 to be cut, arranged upstream, and more precisely on one side of the cutting apparatus 1, and an apparatus 4 for folding the cut bars 2, arranged downstream of the same apparatus 1 (see figures 1 and 2).

The storage 3 can preferably comprise a plurality of compartments 5 arranged in cascade configuration on a fixed framework 6, each compartment 5 being for example provided for the storage of bars 2 of a determined diameter. The compartments 5 are separated by mobile sectors 7 associated with suitable actuation means 8, suitable to operate the same sectors 7, alternatively between an inactive configuration and an active configuration of closure of respective compartment 5. At the above mentioned closure configuration the same sector 7 can act as a ramp for laterally transferring towards the below placed apparatus 1, by falling, one or more bars 2 stored in the adjacent compartment 5.

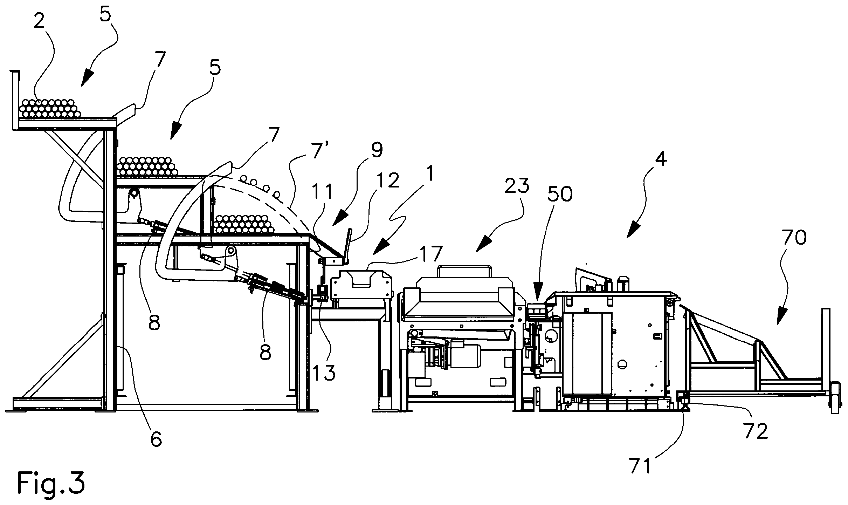

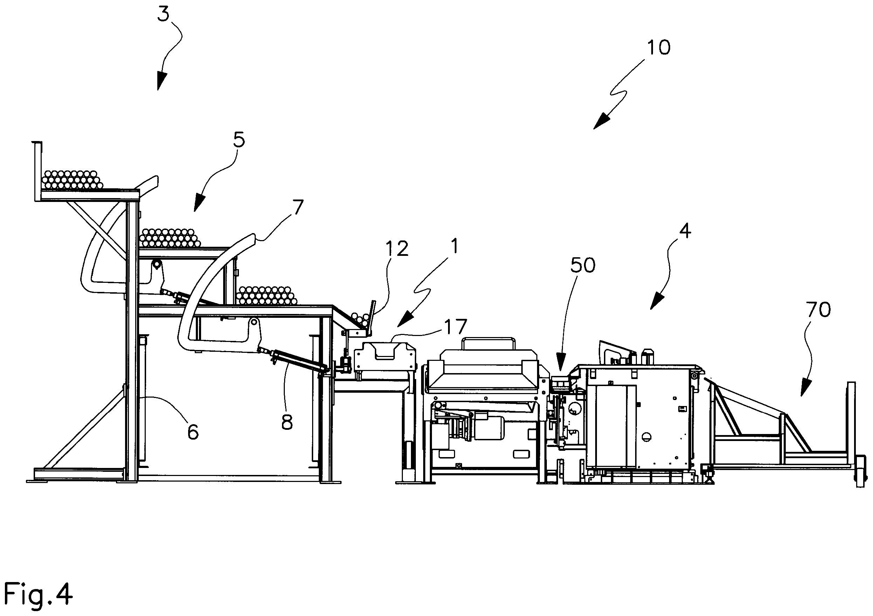

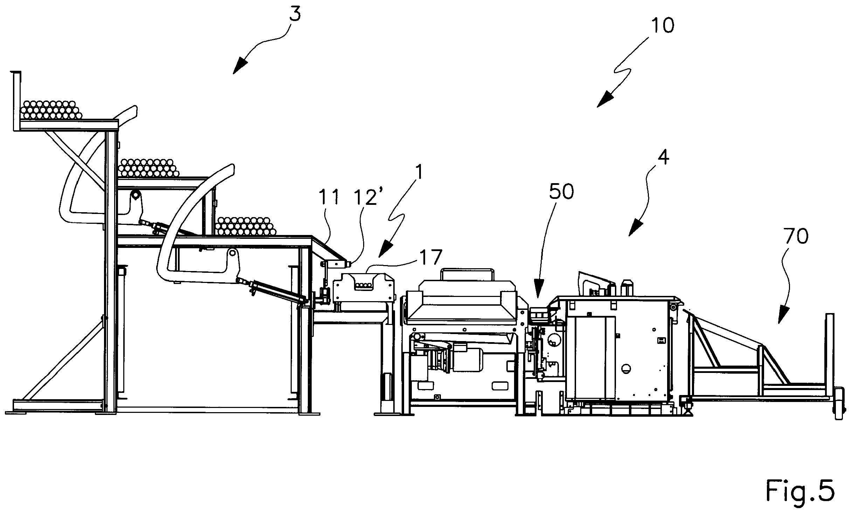

The storage 3 preferably comprises a pre-accumulation storage 9 for said bars 2 fed from the storage 3, arranged laterally to the compartment 5 adjacent to the apparatus 1. The pre-accumulation device 9 comprises for example guide means 11 lateral to the fixed framework 6, for example shaped by a plurality of stirrups arranged downwards inclined, so as to shape a slide inclined plane or a ramp for the bars 2 picked up from the storage 3. The ramp 11 inclined towards the below placed apparatus 1 is associated with respective containment mobile means 12, for example shaped by a plurality of arms rotatable with respect to a horizontal axis transversal to the longitudinal extension of the storage 3. The arms 12 are operated by respective actuation means 13 alternatively between an accumulation position (see figures 3 and 4), emerged with respect to the cited slide plane, for stopping and accumulating the bars 2 picked up from the storage 3 on the same slide plane, and a passage position 12' (see figure 5), submerged with respect to the same plane.

The apparatus 1 is provided with a fixed support framework 14, with a support and measure line 15 supported by the support framework 14 and with a cutting device 16 mobile along the same support and measure line 15 (see figures from 1 to 7). In practice, the cutting device 16 is mobile through the support framework 14, along the support and measure line 15.

The support framework 14 is arranged side by side with the storage 3 so as to receive on the support and measure line 15 the bars 2 picked-up from the accumulation device 9 or, in absence of this latter, directly from the storage 3.

The support and measure line 15 shapes a support plane suitable to receive the bars 2, to perform their heading with respect to at least one abutment member 17 and their measuring through the positioning relative to the mobile cutting device 16 and the abutment member 17, and finally their cutting through the mobile cutting device 16, suitable to place itself at the pre-established cut sections (see figures 3 to 5). More precisely, the line 15 is preferably delimited by lateral borders 18 suitable to laterally contain the bars 2 picked up from the storage 3. The support plane shaped by the line 15 is substantially made up of a plurality of support palettes 19 associated with the fixed framework 14, preferably bearing idle or motorized rolls for easing the handling of the bars 2, for example in the alignment step.

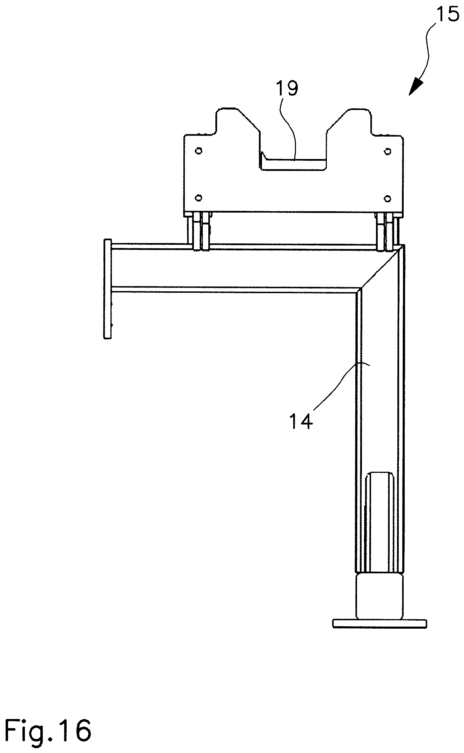

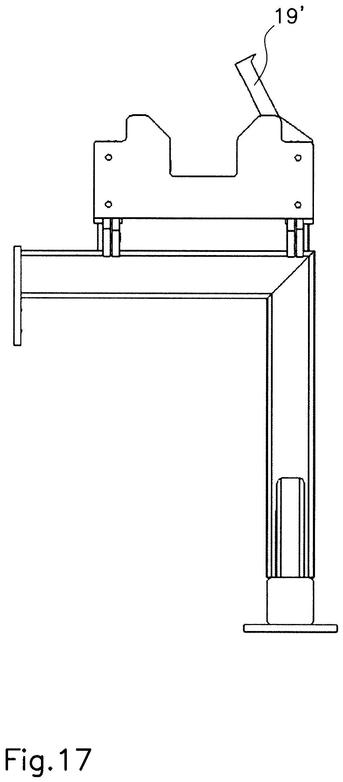

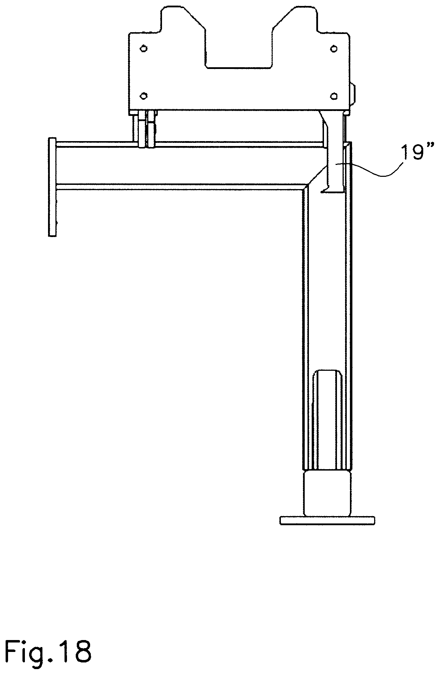

In particular, the support palettes 19 are preferably laterally mounted, at the borders of the same line, for example pivoted, so as to result alternatively mobile, for example tilting or shifting, among a support active position 19, at which the palettes 19 shape the cited support plane with longitudinal extension for the bars 2, substantially horizontal, an inclined position 19', for example lifted with respect to the same support plane, for the unloading of the cut bars 2, and an inactive position 19", for example rotated inferiorly to the line 15 or laterally retracted, suitable to free the passage along the same line 15 in order to allow the interaction of the cutting device 16 with the bars 2 to be cut (see figures 16 to 18).

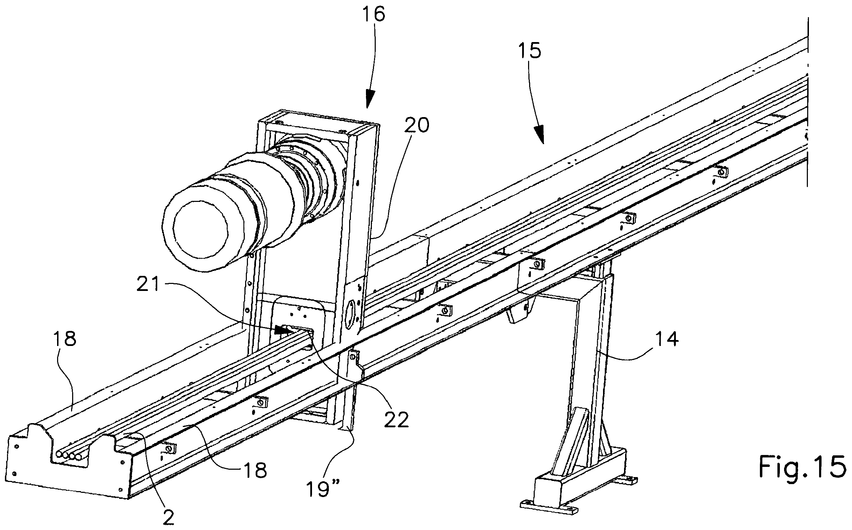

The abutment member 17, fixed or mobile, can be made up of an abutment plate placed at at least one end of the line 15 (see figure 15). In particular, in case the abutment member 17 is provided fixed, the bars are brought against it for producing, as a consequence, their reciprocal alignment. In case the abutment member 17 is provided mobile, the alignment of the bars is carried out through a "hammering" action, which produces the effect of displacing the bars in the reference position.

The cutting device 16 is mounted on the support framework 14 of the apparatus 1, sliding along the longitudinal axis of the line 15. In particular, the cutting device 16 is mounted on a suitable carriage operated mobile along longitudinal tracks, through actuation members not represented for the sake of simplicity.

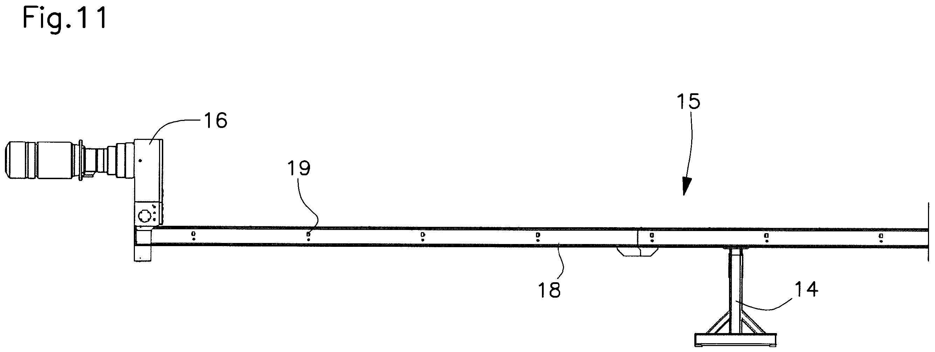

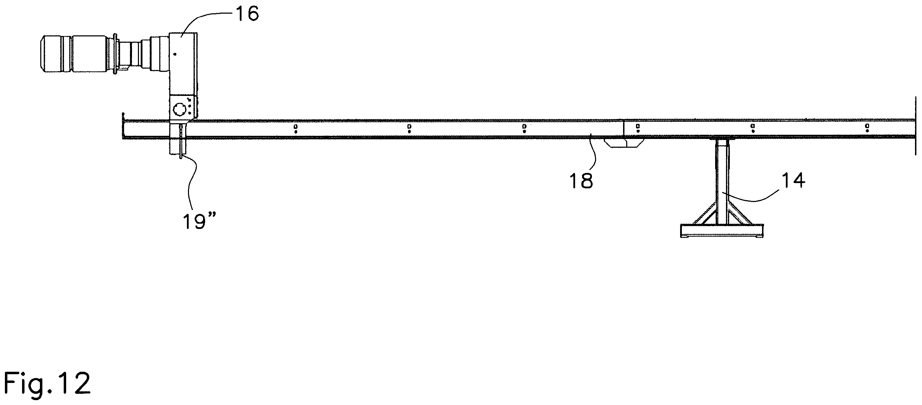

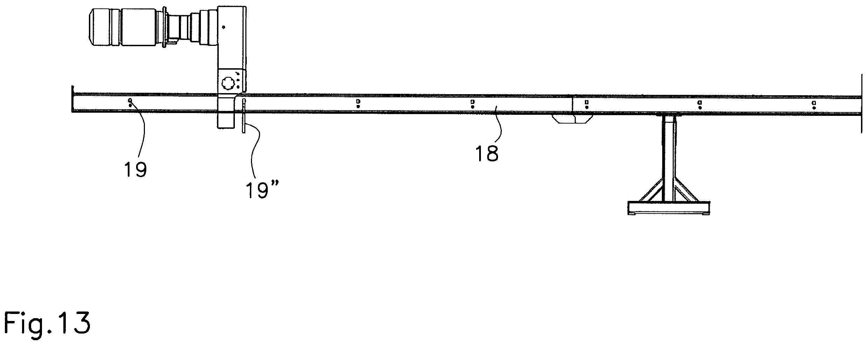

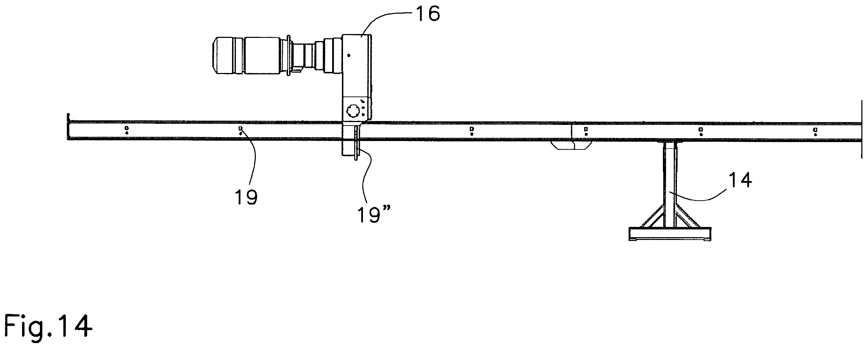

The cutting device 16 comprises cutting means for example of the shears type. More precisely, the cutting device 16 comprises a body 20 comprising an insertion space 21, for example having closed profile, at which the above mentioned cutting means 22 are provided, operable for cutting the intercepted bars 2. The space 21 is suitable to transversally receive one or more bars 2, intercepting the same for performing their cut. Hence, the body 20 is borne mobile by the said carriage, for sliding longitudinally to the line 15 and for intercepting through the aforesaid cavity 21 determined cut sections of the bars 2 to be cut, corresponding to the whished cut measure. Moreover, it is to be observed that, at the passage of the cutting device 16 along the line 15, the support palettes 19 are operated from the active support position to the cited inactive disengagement or non-interference position 19" for allowing the engagement of the shears 16 on the measure and support line 15 (see figures 11 to 14).

The apparatus 1 can be provided as well with stop means, which can be operated and are suitable to cooperate with the shears 16 in order to retain the bars 2 during the cut step.

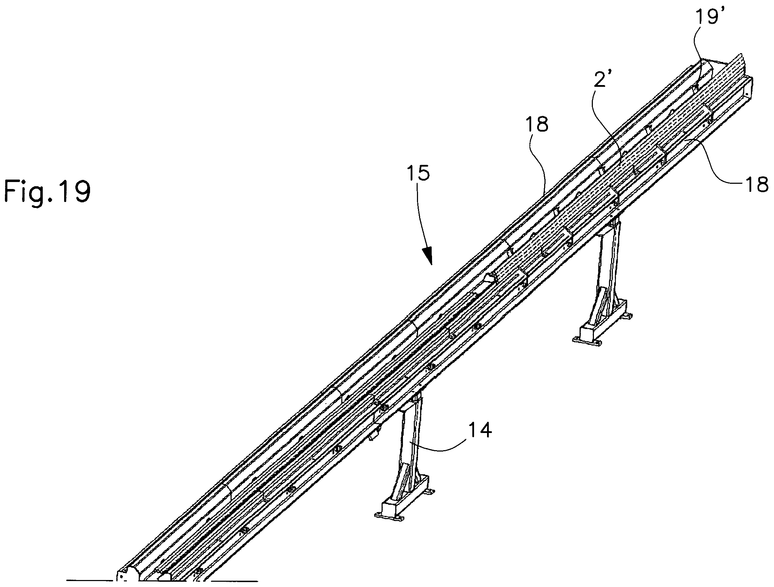

The line 15 (figure 19) is suitable to shape an unloading ramp at the end of the cutting step of the fed and measured bars 2. In particular, for shaping said ramp, the palettes 19 which engage the cut bars 2' are operated in lifted position, inclined towards the adjacent unloading station. For example, in the illustrated case, the plant provides a folding station 4 downstream of the cutting apparatus 1. The palettes 19 arranged in the unloading position 19' are, thus, suitable to cause the transferring, by sliding on the inclined plane shaped by them, to a roller conveyor 23 used for the fold.

The folding apparatus 4, if provided, comprises, downstream of the above mentioned roller conveyor 23, at least one folding head 40 for performing the folding of the cut bars 2'. For example, in the illustrated case, the folding apparatus 4 comprises a couple of folding heads 40, for folding the opposite ends of the cut bars 2'.

Each folding head 40 is for example of the traditional type, comprising a central mandrel and an eccentric fold pin, mounted on a folding bench 41. In particular, the eccentric folding pin is mounted rotatable around the axis of the central mandrel, for performing the folding of a portion of the cut bar 2' which is interposed between the central mandrel and the rotatable eccentric fold pin. In substance, the folding of the bar 2' is performed further to the rotation of the eccentric pin around the axis of the central mandrel.

The folding bench 41 can preferably slide on rails 42, to adjust the reciprocal positioning of the folding heads 40 with respect to the cut bars 2' to be folded. In the illustrated case then two folding heads 40 are provided, mounted on respective benches 41 mobile on the rails 42 for adjusting the distance between the respective folding heads 40. The benches 41 can be operated by respective actuation means, for example of the rack type, suitable to operate their mutual approaching and spacing, or, in the same way, the feeding or the backing (see figure 1 and 2).

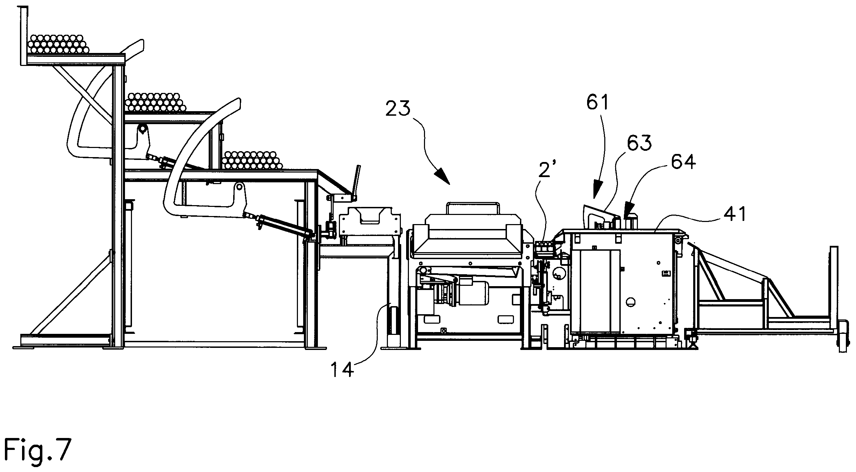

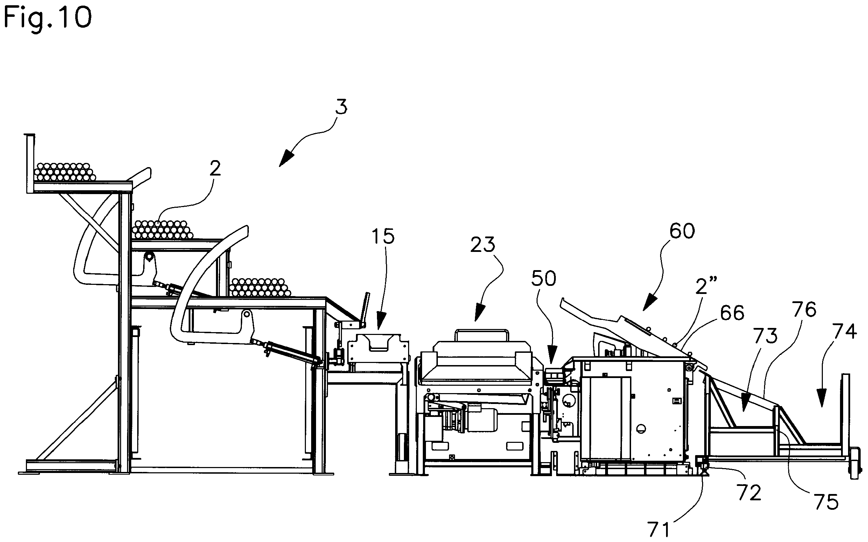

The folding apparatus 4 preferably cooperates with a collecting unit 50 of the cut bars 2' coming from the line 15 and subsequently transferred to the roller conveyor 23, and with a loading and unloading unit 60, for transferring the cut bars 2' from the collection unit 50 towards the folding head 40 (see figures 7 to 9) and for the unloading downstream of the folded bars 2" (see figure 10).

More precisely, each folding bench 41 can bear on one side the collecting unit 50, on the side turned towards the roller conveyor 23 preferably provided for the plant 10.

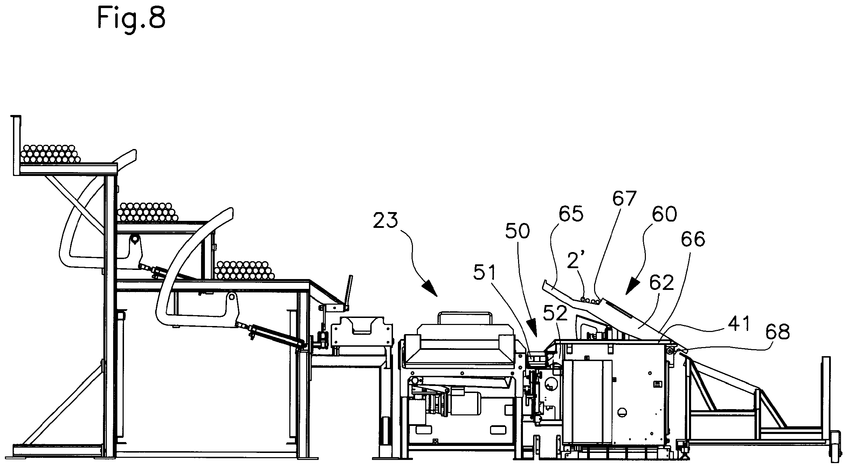

The collecting unit 50 comprises for example a collecting roller 51 preferably idle, fixed at an overhang shelf 52, constrained to the framework of the bench 41. Therefore, the collecting roller 51 is arranged between the roller conveyor or roller plane 23 and the folding head 40 (see figure 8).

Such collecting roller 51 preferably has a transversal extension such as to support the number of cut bars 2' destined to be used in a same folding cycle. In the case illustrated as an example, four cut bars 2' coming from the roller conveyor 23 are arranged in support on the collecting roll 51 associated with each folding bench 41.

The loading and unloading unit 60 for the cut bars 2' comprises a fixed ramp 61 and a tilting arm 62 (see figures 7 and 8). The fixed ramp 61 substantially shapes a fixed arm borne overhanging by the folding bench 41 of the folding unit 4, bearing on its top an inclined surface 63 preferably plane, suitable to allow the rolling of the cut bars 2' by the force of gravity from an upper position to a lower position, at which the same cut bars 2' result engaged in a central portion 64 corresponding to the zone comprised between the central mandrel and the eccentric fold pin of the at least one folding head 40 previously described (see figures 7 to 9).

The tilting arm 62 comprises a loading portion 65 which extends beyond an unloading portion 66. More precisely, the loading portion 65 is separated from the unloading portion 66 by means of a shoulder 67 suitable to prevent the rolling towards the unloading position 66 of the cut bars 2' in support on the loading portion 65. Moreover the tilting arm 62 is pivoted on an axis 68 laterally to the folding head 40 on the framework of the folding bench 41, on the opposite side with respect to the collecting unit 50.

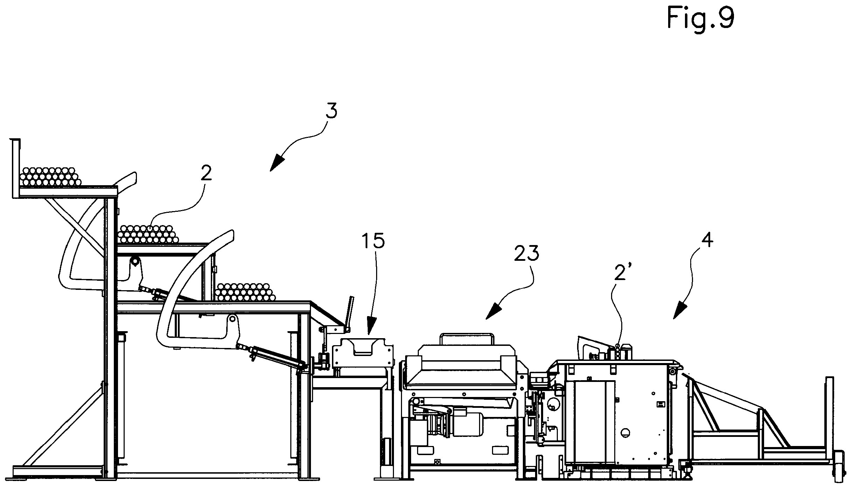

A motor member or an actuator of known type, not illustrated, commands the alternate operation of the tilting arm 62 from a lower position substantially horizontal to an upper inclined position. At the cited lower position, the loading portion 65 is placed in a zone below the idle roller 51. Further to the rotation of the tilting arm 62 around the axis 68, the loading portion 65 is suitable to lift itself with respect to the plane of the roller 51 until the cited upper position, thus lifting the cut bars 2' above the fixed arm 61. Continuing the lifting of the arm 62, the loaded bars 2' arrive through the force of gravity against the shoulder 67 (fig 8). In such intermediate lifted configuration, the above mentioned loading portion 65 is suitable to arrange itself in a way substantially parallel to the inclined surface 63 of the fixed ramp 61. More precisely, during the lifting of the tilting arm 62, the bars 2" folded in the previous work cycle can be unloaded through the same movement (see figure 10), and simultaneously the cut bars 2' which are going to be folded in the following work cycle can be lifted. The subsequent lowering of the tilting arm 62 will bring the cut bars 2' in contact with the inclined surface 63 of the fixed ramp 61, on which the cut bars 2' will slide until falling in the central portion 64 between the central mandrel and the eccentric fold pin (fig 9).

Downstream of the folding apparatus 4, a mobile storage 70 is placed nearby, suitable to receive and organize the folded bars 2". Such mobile storage 70 is preferably a framework sliding in longitudinal direction on tracks 71 fixed on the floor through rolling means 72.

In the illustrated case the mobile storage 70 comprises a first space 73 and a second space 74 separated by division means 75 for the organized housing of respective folded bars 2". A tilting ramp 76 is pivoted superiorly to the division means 75 and is suitable to close the first space 73. In particular, such tilting ramp 76 is, for example, operated by hand between a closure position of the fist space 73 and a lifted position suitable to allow the falling of the folded bars 2" in the same underlying space 73. It is to be underlined that in the above mentioned closed configuration the tilting ramp 76 is inclined and in continuous connection with the unloading portion 66 of the tilting arm 62, in order to allow the transferring by falling of the folded bars 2" in the second space 74 (see figure 10).

The functioning of the apparatus which carries out the method for cutting bars according to the invention is easy to understand from the preceding description.

The bars 2 to be cut are collected in the respective compartments 5 of the storage 3, for example according to their diameter or to any other size parameter.

Each cutting and folding cycle provides to cut and possibly fold a determined number of bars 2 of a specific type.

In the starting step of the working cycle, a determined number of bars 2 or a subgroup of them is picked up from the collecting compartment 5 by hand or through automatic means and transferred to the support and measure line 15, preferably previously stationing on mobile containment means 12 arranged in the active containment position (see figure 4). More precisely, the stationing on the channel *defined* by containment mobile means 12 allows to pick up the determined number of bars 2 through following pick-ups from the storage 3 and to temporary store the picked up bars 2, without waiting for the apparatus 1 to have completed the cut cycles on the bars 2 previously fed.

The picked up bars are then fed to the line 15 through the positioning of the mobile containment means 12 in the inactive position, submerged with respect to the sliding plane shaped by the ramp 11 of the pre-accumulation device 9.

The bars are then handled, for example by hand, along the line 15 against the abutment member 17 pre-arranged at at least one of the ends of said line 15, in order to be able to determine the cut measure with respect to such reference. More precisely, in such step, respective ends of the fed bars 2 are vigorously handled against the abutment member 17 or vice versa are aligned further to the cited "hammering" operation.

In the following step, the cutting apparatus 1 is operated for intercepting the cut sections of the bars 2 fed and prearranged on the line15 and for performing their cut.

In substance, the mobile cutting device or shears 16 is handled along the line 15 for being positioned at a distance from the abutment means 17 substantially equal to a predefined measure for the cut of the bars 2. In such handling step, the cutting device 16 is operated in motion along the same line 15. Thanks to such motion, longitudinal to the line 15, the fed and measured bars 2 are progressively inserted, that is engaged, inside the space 21, at which the cutting means 22 are prearranged in inactive position. Advantageously, the cutting device 16 can be placed, thanks to the above mentioned longitudinal motion along the measure tract of the line 15, in such a way as to enable the cutting means 22 to reach any section of the fed bars 2, thus obtaining cut bars 2' of any length (see in particular figures 11 to 15). It is necessary to observe that during its motion, the cutting device 16 can move without obstacles because the support palettes 19 for the bars 2 can be brought in the inactive disengaged position 19", at least at the moment and selectively for being placed again in the support position 19 once the above mentioned passage has been completed.

Once positioned to measure, the cutting device 16 carries out the cutting of the bars 2. More precisely, in this step the cutting means 22, for example made up of a blade which can be operated transversally to the space 21, are operated in the cutting position, intercepting the same space 21, for the cut of the bars 2 intercepted at the predefined measure.

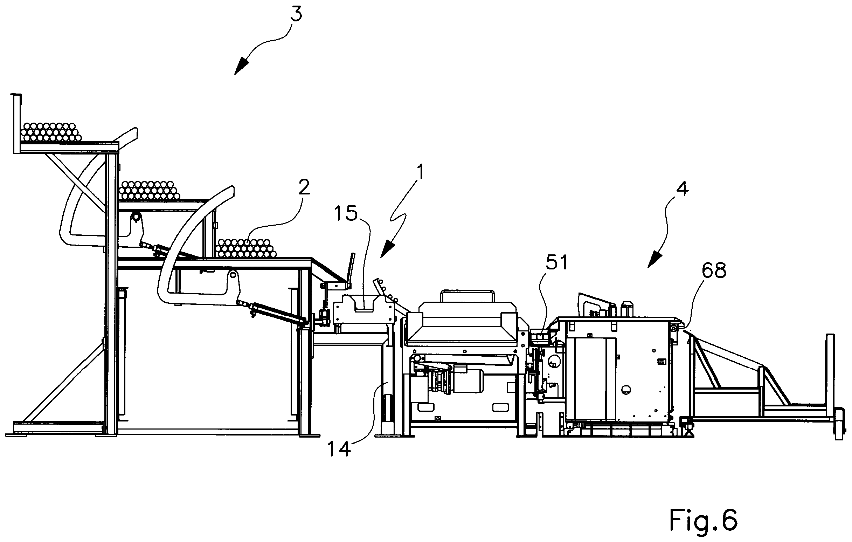

Subsequently, the cut bars 2' are transferred to the folding station 40. More precisely, at least at the cut bars 2' the palettes 19 are operated in the unloading configuration 19", suitable to shape a ramp for transferring the cut bars 2' towards the intermediate roller conveyor 23 and from it to the folding bench 41 (see figures 6 and 19). More precisely, the transferring of the cut bars 2' can be carried out immediately after the cut, preferably by operating only that part of support palettes 19 interested. As an alternative, more cuts can be performed on a same group of fed bars 2, thus obtaining as much portions of cut bars 2', of different or of equal length. In such case, the unloading can occur in more following steps, after each cut cycle, or simultaneously at the end of the cut cycles.

The cut bars 2' are then transferred, for example by hand or through the operation of further sliding means associated with the same roller conveyor 23, with the collecting unit 50 serving the fold bench 41.

In order to perform the possible folding at the opposite ends of the cut bars 2', the couple of folding benches 41 is provided at a reciprocal distance suitable for the required folding, previously handling the benches 41 along the rails 42.

Then the loading and unloading unit 60 is operated, with the tilting arm 62 initially arranged in the lower position, underlying the height of the collecting roller 51 on which the cut bars 2' are collected, waiting for being folded (see figure 7).

The tilting arm 62 is then lifted above the height of the collecting roller 51, so as to pick up the here collected cut bars 2', lift them and make them slide on the relative loading portion 65 against the shoulder 67. In this intermediate lifted configuration, the loading portion 65 is arranged in a manner substantially parallel to the fixed ramp 61 of each folding bench 41. Then, the loading to the respective fold head 40 of the cut bars 2' is completed, by lowering the tilting arm 62 in a configuration underlying the fixed ramp 61. Further to such movement of the tilting arm 62, the cut bars 2' are released in support on the fixed ramp 61, for sliding in the central section 64 of the folding head 40 (see figures 8 and 9).

The folding head 40 can then perform the desired folding of the bars inserted in the respective central section 64, suitably operating the respective eccentric fold pin around the central mandrel.

Once carried out the fold, the folded bars 2" can be again taken from the loading and unloading device 60. More precisely the tilting arm 62 is again lifted from the lower inactive configuration to the lifted configuration. Further to such lifting the folded bars 2" are picked up at the central portion 64 and taken in charge by the tilting arm 62 at the unloading portion 66 which is arranged inclined. Once picked up, the folded bars 2" slide along the unloading portion 66 and reach a determined space of the mobile storage 70, having previously operated in suitable way the tilting ramp 76, to store the folded bars 2" in the first space 73 or in the second space 74, for example (see figure 10).

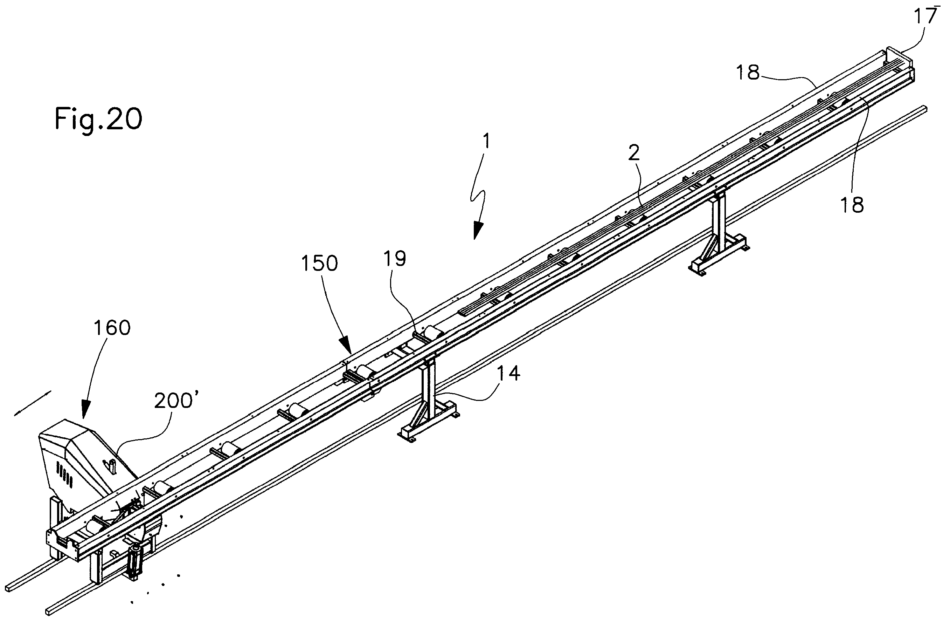

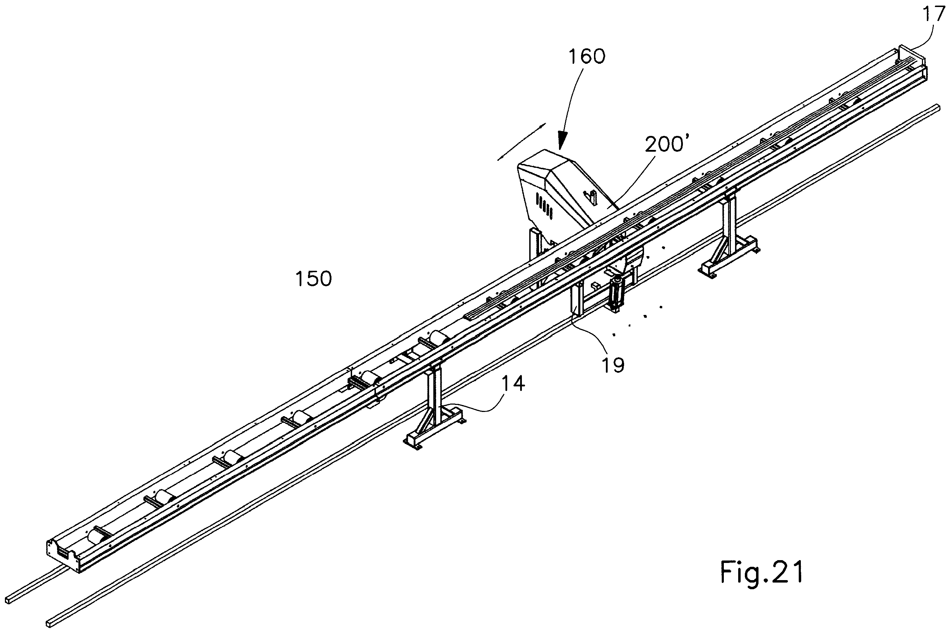

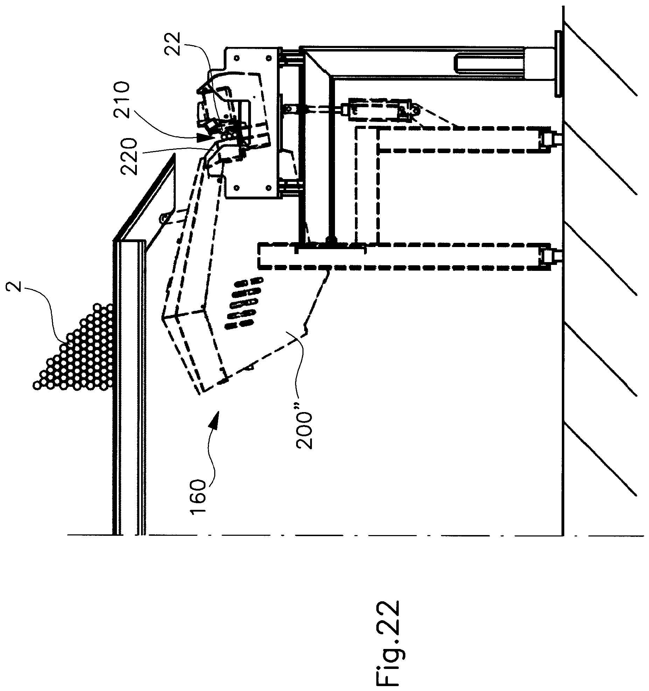

According to a further embodiment, illustrated in figures 20 to 22, it is possible to provide that the mobile cutting device 160 has an insertion space 210 with an open profile instead of closed, as it is in the previously illustrated case. In such case, the open configuration of the cutting space enables the cutting device 160 to insert itself transversally to the bars along the support and measure line 150, being this latter realized in a suitable way.

In such case, the device 160 associated with the line 150 is mobile on rails along the same line 150 and is as well mobile alternatively between an inactive position 200', at which the body 200 and the cutting means 22 associated therewith are spaced from the fed bars 2 and then do not interact with them, and an active position 200", inserted transversally to the bars 2, at which the cutting means 22 can interact with the fed bars 2 and carry out their cutting.

In particular the body 200 *comprises* a space 210 or insertion channel for the bars 2, in which the cutting means 22 can work, being the body mobile on a plane substantially orthogonal to the support and measure line 150 and longitudinally to the same line 150 as well. In the inactive configuration 200', the channel 210 does not interfere with the receiving plane for the bars 2 and with the relative support and measure line 150, while in the active configuration 200", the channel 210 intercepts the above mentioned plane, thus receiving the bars 2, for performing their cutting through the operation of the cutting means 22.

For example, in the specific case illustrated in figures 20 to 22, the body 200 of the cutting device 160 is pivoted tiltable around an axis substantially parallel to the support and measure line 150, side by side with this latter. The body 200 is consequently tiltable between the cited inactive position 200', at which the cutting means borne by the device 160 lie behind the support and the measure line 15, and the cited active position 200", at which the same cutting means are arranged on the support and measure line 150 so as to intercept and cut the fed bars 2. In particular, the cutting means may *comprise* a blade and a counter-blade, arranged on opposite sides of the insertion space 210 shaped by the body 200. More in particular, the space 210 *builds* a channel for the insertion of the bars 2, having such a size as to be able to receive the bars 2 in mutual overlapping, preferably helped by suitable conveying means 220 associated with the same body 200. The cutting blades are consequently reciprocally mobile between an open configuration, at which at least one bar 2 or preferably a plurality of bars arranged according to a vertical overlapping of the respective sections can be inserted between the blade and the counter-blade, and a closed configuration, at which the blade and the counter-blade are reciprocally approached, for performing the cutting of the interposed bar or bars 2. In particular, the cited conveying means 220 are suitable to perform the conveying of the fed bars 2 from a support and horizontal juxtaposition configuration on the support and measure line 150, to an insertion configuration for the insertion of the cutting means 22 in the channel 210 between the blade and the counter-blade, according to a substantially vertical alignment of the sections. According to such embodiment, the cutting can be advantageously carried out by handling the cutting means according to a substantially horizontal direction, transversal to the feed and cut line 150, thus protecting the support means and the bars 2 from dangerous dynamic reactions in vertical direction.

As an alternative, it is possible to provide that the body 200 of the cutting device 160 longitudinally sliding on suitable tracks, is able to tilt, to shift or more in general to move superiorly to the support and measure line 150, instead of, or in addition to, inferiorly as it was previously described. In any case, the cutting means are operated relatively to the body 200 for intercepting and cutting the bars 2.

The feeding line 150 can further provide a series of motorized rolls interposed with the palettes 19, suitable to automatically perform the handling of the bars 2 against the abutment member 17.

The functioning of the cutting device 160 according to this further embodiment is easy to understand from the preceding description.

The body 200 of the cutting device 160 is operated from the inactive position 200' to the active position 200". In this step the conveying means 220 are operated, to convey the fed bars 2 to the line 150 in the interception channel 210 defined between blade and counter-blade of the cutting means. In substance, further to the above mentioned conveying action, the cut sections of the fed bars 2, which initially are in horizontal alignment on the line, are inserted inside the above mentioned channel or space according to an aligned vertical arrangement more advantageous for the cutting, according to what was previously said. The cutting means are then operated from the inactive open position to the closed cut position for the interception and the cut of the bars 2 inserted in the above mentioned space.

The remaining steps and features of the apparatus are substantially unvaried.

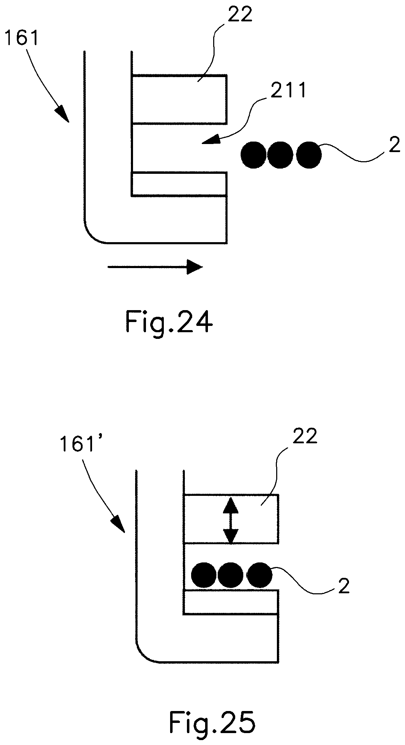

According to a further embodiment, represented in figures 24 and 25, it is possible to provide that the cutting device 161 comprises an insertion space having open profile, suitable to *build* an insertion channel 211 which, in use, presents an extension substantially horizontal in which the cutting means 22 are working. In such case, the device 161 is mobile according to a shift motion substantially transversal to the support and measure line, between the cited inactive position, laterally spaced from the support and measure line and the cited active position 161', inserted on the bars for interacting with them. When the bars 2 to be cut are intercepted by the cutting means of the cutting device 160, they are then horizontally aligned on the support and measure line, differently from the previously described case, in which the insertion of the bars 2 in the channel 210 causes at the same time their overturning in a condition of vertical overlapping.

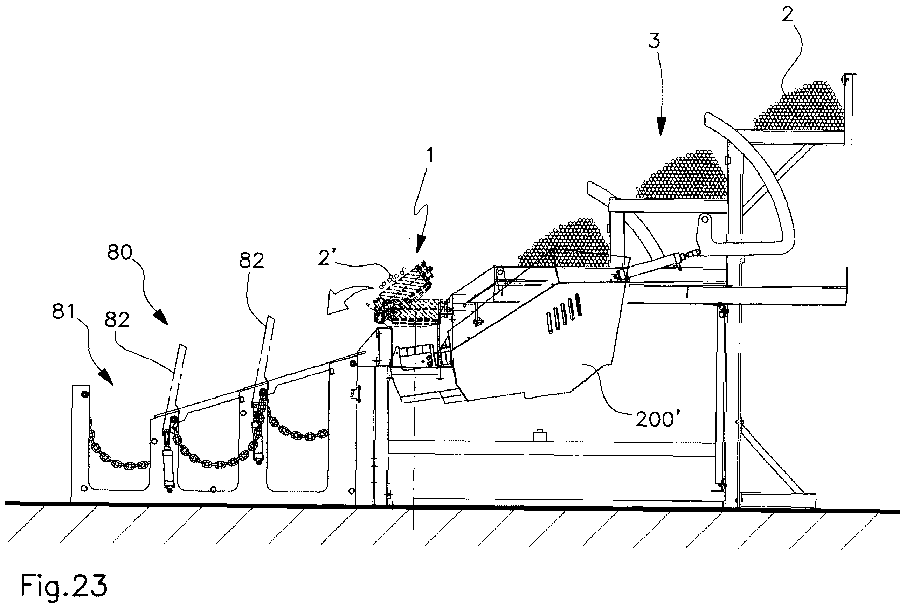

According to a further embodiment represented in figure 23 it is possible to provide that the apparatus 1 is installed upstream of a fixed or mobile storage 80, having more accumulation compartments 81 for the bars 2' cut to measure, which in this case represent the final product. The compartments 81 can be separated by suitable mobile sectors 82, in a way similar to the mobile sectors 7 of the storage 3, previously described.

The method and the apparatus for cutting bars according to the invention attains the scope of allowing to perform in an optimal way the cut of bars, in particular reducing as much as possible the occupied space and the working times on each cut cycle.

In practice, the embodiment of the invention, the materials used, as well as their shape and dimensions, may vary depending on the requirements.

## Claims

1. Method for cutting bars comprising the steps of:
a1. prearranging a support and measure line (15, 150) supported by a support framework (14) and shaping a support plane for bars (2), along a longitudinal axis;
a2. prearranging a cutting device (16, 160) carrying cutting means (22), longitudinally mobile through said framework (14) of said support and measure line (15, 150);
a3. prearranging an abutment member (17) at one end of said support and measure line (15, 150);
b. feeding a determined number of bars (2) on said support and measure line (15, 150), and arranging one end of said determined number of fed bars (2) in abutment against said abutment member (17);
c. longitudinally handling, through said framework (14), said cutting device (16, 160) along said support and measure line (15, 150), relatively to said determined number of fed bars (2);
d. stopping said cutting device (16, 160) inside said support and measure line (15, 150), in a position relative to said abutment member (17), corresponding to a pre-established measure for said determined number of bars (2) to be cut;
e. operating said cutting means (22) carried by said cut device (16, 160) at said relative position, to perform the cutting of said determined number of bars (2) at said predefined measure;
f. possibly repeating the steps c. to e. until completing the cutting cycle, said method being **characterized in that** it comprises the further steps of:
a4. prearranging support means (19) along said support and measure line (15, 150) which can be selectively operated between an active support position for said determined number of bars (2), substantially horizontal, and an inactive position (19") spaced with respect to said line (15, 150), suitable to free the passage for the insertion of said cut device (16, 160) on said determined number of bars (2) to be cut;
c1. selectively operating said support means (19) in said inactive position (19") for allowing the placing of said cutting device (16, 160) along said support and measure line (15, 150).

2. Method according to claim 1, **characterized in that** the step of c. longitudinally handling, through said framework (14), said cutting device (16, 160) occurs along longitudinal tracks associated with said support framework (14), substantially between one end and the other of said support and measure line (15, 150).

3. Method according to claim 1 or 2, **characterized in that** it comprises the further step of e1. transferring said determined number of cut bars (2') laterally to said support and measure line (15).

4. Method according to claim 3, **characterized in that** the step of e1. laterally transferring said determined number of cut bars (2') occurs by operating at least part of said support means (19) in a discharging position (19'), inclined with respect to said support position (19).

5. Method according to claim 3 or 4, **characterized in that** it comprises the further step of:
a5. prearranging a folding station (4) at one side of said support and measure line (15, 150) and
g. transferring said determined number of cut bars (2') to said folding station (4) and
h. performing the folding of said determined number of cut bars (2') at said folding station (4).

6. Apparatus for cutting bars (2) comprising a support and measure line (15, 150) supported by a support framework (14) and shaping a support plane for said bars (2) along a longitudinal axis, comprising an abutment member (17) arranged at one end of said support and measure line (15, 150), suitable to perform the reciprocal alignment of a determined number of bars (2) and to act as a reference for measuring said determined number of bars (2) to be cut, and a cutting device (16, 160) carrying cutting means (22), longitudinally mobile through said support framework (14) along said support and measure line (15, 150) for performing the cutting of said determined number of bars (2) inside said support and measure line (15, 150), in a position relative to said abutment member (17), corresponding to a predefined measure,
said cutting device (16, 160) being mounted on a suitable carriage operated mobile along longitudinal tracks substantially between one end and the other of said support and measure line (15, 150),
said apparatus being **characterized in that** said support and measure line (15, 150) comprises support means (19) selectively operable between a substantially horizontal support position (19) and an inactive position (19") spaced from said support and measure line (15, 150), suitable to free at least temporarily the passage at said same support and measure line (15, 150) for the insertion of said cutting device (16, 160).

7. Apparatus according to claim 6, **characterized in that** said support means (19) are selectively operable in a lifted unloading position (19'), inclined with respect to said support position (19), for the unloading of the determined number of cut bars (2'), laterally to said support and measure line (15, 150).

8. Apparatus according to claim 6 or 7, **characterized in that** said support means (19) *comprise* palettes tiltable with respect to said support framework (14) of said support and measure line (15, 150), said palettes carrying rolling means of the type of idle or motorized rolls.

9. Apparatus according to one of the claims 6 to 8, **characterized in that** said mobile cutting device (16) comprises a body (20) comprising an insertion space (21) at which said cutting means (22) can be operated for the cutting of said determined number of bars (2), said space (21) being transversal to said support and measure line (15) and suitable to intercept the sections of said determined number of bars (2) longitudinally prearranged on said support and measure line (15).

10. Apparatus according one of the claims from 6 to 8, **characterized in that** said cutting device (160, 161) comprises a body (200) having a space (210, 211) for the insertion of said determined number of bars (2), having open profile, in which said cutting means (22) are operative, said body (200) being as well mobile on a plane substantially orthogonal with respect to said support and measure line (150), between an inactive configuration (200') at which said space (210, 211) is spaced from said support plane for said bars (2) defined by said support and measure line (150) and an active configuration (200") at which said space (210, 211) intercepts said plane, for performing the cutting of said determined number of bars (2) by means of the activation of said cutting means (22).

11. Apparatus according to claim 10, **characterized in that** said body (200) of said cutting device (160) is mounted tiltable in said orthogonal plane between said inactive configuration (200') and said active configuration (200").

12. Apparatus according to claim 10, **characterized in that** said body of said cutting device (161) is mobile with shifting motion between said inactive configuration drawn back from said support plane for said bars (2) and said active configuration, inserted (161') on said support plane of interaction on said determined number of bars (2) to be cut.

13. Plant for cutting bars comprising at least one cutting apparatus according one of the claims 6 to 12, comprising a storage (3) for said bars (2) adjacent to said support and measure line (15, 150), and a further storage (80) for said cut bars (2'), adjacent, on the opposite side, with respect to said support and measure line (15, 150), suitable to receive said cut bars (2') from said support and measure line (15, 150).

14. Plant for cutting bars comprising at least one cutting apparatus according to one of the claims from 6 to 12, comprising a storage (3) for said bars (2) adjacent to said support and measure line (15, 150), and a folding apparatus (4) for folding cut bars (2'), adjacent, on the opposite side, with respect to said measure and support line (15, 150), suitable to receive said cut bars (2') from said support and measure line (15, 150).

## Patentansprüche

1. Verfahren um Stäbe zu schneiden, bestehend aus den Schritten:
a1. Voranordnung einer Stütz- und Messlinie (15, 150) gestützt durch einen Tragrahmen (14) und Bilden einer Auflageebene für Stäbe (2), entlang der Längsachse;
a2. Voranordnung einer Schneideelemente (22) tragendenden Schneidvorrichtung (16, 160), längsseitig beweglich durch den genannten Tragrahmen (14) der genannten Stütz- und Messlinie (15, 150);
a3. Voranordnung eines Anschlagelements (17) an einem Ende der genannten Stütz- und Messlinie (15, 150);
b. Beladen der genannten Stütz- und Messlinie (15, 150) mit einer bestimmten Anzahl an Stäben (2) und Anordnung einer Seite der genannten bestimmten Anzahl an Stäben (2) auf Anschlag zum genannten Anschlagelement (17);
c. Längsseitige Bearbeitung durch den genannten Tragrahmen (14), der genannten Schneidvorrichtung (16, 160) entlang der genannten Stütz- und Messlinie (15, 150), in Bezug auf die bestimmte Anzahl an geladenen Stäben (2);
d. Stoppen der genannten Schneidvorrichtung (16, 160) in der genannten Stütz- und Messlinie (15, 150), in einer Position relativ zum genannten Anschlagelement (17), entsprechend eines vorher festgelegten Maßes für die genannten bestimmten Anzahl an zu schneidenden Stäben (2);
e. Verwenden der genannten Schneidelemente (22), getragen von der genannten Schneidvorrichtung (16, 160), an der genannten relativen Position, um den Schnitt der genannten bestimmten Anzahl an Stäben (2) am vorher bestimmten Maß durchzuführen;
f. Etwaige Wiederholung der Schritte c. bis e. bis zum Abschluss des Schneidevorgangs, genanntes Verfahren dadurch bestimmt, dass es aus folgenden Schritten besteht:
a4. Voranordnung von Stützelementen (19) entlang der genannten Stütz- und Messlinie (15, 150), die selektiv in aktiven Stützpositionen für die genannte bestimmte Anzahl an Stäben (2), im Wesentlichen horizontal oder in einer inaktiven Position (19") abständig in Bezug auf die genannte Linie (15, 150), geeignet, um die genannte Schneidvorrichtung (16, 160) auf die genannte bestimmte Anzahl an zu schneidenden Stäben einzuführen, genutzt werden können;
c1. Selektive Benutzung der genannten Stützelemente (19) in der genannten inaktiven Position (19"), um die Positionierung der Schneidvorrichtung (16, 160) entlang der genannten Stütz- und Messlinie (15, 150) zu ermöglichen.

2. Verfahren nach Anspruch 1, **gekennzeichnet dadurch, dass** Schritt c. der längsseitigen Bearbeitung, durch den genannten Tragrahmen (14), der genannten Schneidvorrichtung (16, 160), an längsseitigen, dem genannten Tragrahmen (14) zugeordneten Abschnitten erfolgt, hauptsächlich zwischen einem und dem anderen Ende der genannten Stütz- und Messlinie (15, 150).

3. Verfahren nach Anspruch 1 oder 2, **gekennzeichnet dadurch, dass** es einen weiteren Schritt e1. beinhaltet, die bestimmte Anzahl an geschnittenen Stäben (2') seitlich zur genannten Stütz- und Messlinie (15) zu transportieren.

4. Verfahren nach Anspruch 3, **gekennzeichnet dadurch, dass** der Schritt e1. des seitlichen Transportes der genannten bestimmten Anzahl an geschnittenen Stäben (2') dadurch geschieht, dass mindestens ein Teil der genannten Stützelemente (19) in einer Entladeposition (19') benutzt wird, die in Bezug auf die genannte Stützposition (19) geneigt ist.

5. Verfahren nach Anspruch 3 oder 4, **gekennzeichnet dadurch, dass** es einen weiteren Schritt e1. beinhaltet:
a5. Voranordnung einer Faltstation (4) an einer Seite der Stütz- und Messlinie (15, 150) und
g. Transport der genannten bestimmten Anzahl an geschnittenen Stäben (2') zu genannter Faltstation (4) und
h. Durchführung der Faltung der genannten bestimmten Anzahl geschnittener Stäbe (2') an genannter Faltstation (4).

6. Vorrichtung, um Stäbe (2) zu schneiden, bestehend aus einer Stütz- und Messlinie (15, 150) gestützt durch einen Tragrahmen (14) und Bilden einer Auflageebene für Stäbe (2), entlang der Längsachse, bestehend aus einem Anschlagelement (17) an einem Ende der genannten Stütz- und Messlinie (15, 150) in der Lage die gegenseitige Ausrichtung einer bestimmten Anzahl an Stäben (2) durchzuführen und als Referenz zur Messung der genannten bestimmten Anzahl an Stäben (2), die geschnitten werden sollen, zu dienen, und einer Schneideelemente (22) tragendenden Schneidvorrichtung (16, 160), längsseitig beweglich durch den genannten Tragrahmen (14) der genannten Stütz- und Messlinie (15, 150), um den Schnitt der genannten bestimmten Anzahl an Stäben (2) innerhalb der genannten Stütz- und Messlinie (15, 150), in einer Position relativ zum genannten Anschlagelement (17), entsprechend eines vorbestimmten Maßes, durchzuführen, genannte Schneidvorrichtung (16, 160) befestigt auf einem passenden Schlitten, der beweglich, hauptsächlich zwischen längsseitigen Abschnitten, zwischen dem einem und dem anderen Ende der genannten Stütz- und Messlinie (15, 150), benutzt werden kann; genannte Vorrichtung **gekennzeichnet dadurch, dass** die genannte Stütz- und Messlinie (15, 150) Stützelemente (19) beinhaltet, die selektiv in aktiven Stützpositionen, im Wesentlichen horizontal, oder in einer inaktiven Position (19") abständig in Bezug auf die genannte Linie (15, 150), genutzt werden können, um zumindest zeitweise den Durchgang für die Einführung der genannten Schneidvorrichtung (16, 160) freizuhalten.

7. Vorrichtung nach Anspruch 6, **gekennzeichnet dadurch, dass** die genannten Stützelemente (19) selektiv in einer gehobenen Entladeposition (19'), geneigt in Bezug auf die Stützposition (19), benutzt werden können, um die bestimmte Anzahl an geschnittenen Stäben (2') seitlich zur Stütz- und Messlinie (15, 150) zu entladen.

8. Vorrichtung nach Anspruch 6 oder 7, **gekennzeichnet dadurch, dass** die genannten Stützelemente (19) in Bezug auf den Tragrahmen (14) der genannten Stütz- und Messlinie (15, 150), schwenkbare Paletten beinhalten, genannte Paletten tragen Rollmittel des Typs inaktiver oder motorisierter Rollen.

9. Vorrichtung nach einem der Ansprüche 6 bis 8, **gekennzeichnet dadurch, dass** die genannte bewegliche Schneidvorrichtung (16) aus einem Körper besteht, bestehend aus einem Einwurfsraum (21), an dem die genannten Schneidelemente (22) benutzt werden können, um die genannte bestimmte Anzahl an Stäben (2) zu schneiden, genannter Raum (21) transversal zur genannten Stütz- und Messlinie (15) angebracht und in der Lage, die Abschnitte der genannten bestimmten Anzahl an Stäben (2), längsseitig vorangeordnet auf der genannten Stütz- und Messlinie (15), zu unterbrechen.

10. Vorrichtung nach einem der Ansprüche 6 bis 8, **gekennzeichnet dadurch, dass** die genannte Schneidvorrichtung (160, 161) aus einem Körper (200) mit einem Raum (210, 211) für die Einführung der genannten bestimmten Anzahl an Stäben, mit einem offenen Profil, in dem die genannten Schneidelemente (22) angebracht sind, besteht, genannter Körper (200) beweglich hauptsächlich auf einer Ebene orthogonal zur genannten Stütz- und Messlinie (150), zwischen einer inaktiven Konfiguration (200'), bei der der genannte Raum (210, 211) von der genannten Stützebene für die genannten Stäbe (2), definiert durch die genannte Stütz- und Messlinie (150), entfernt ist, und einer aktiven Konfiguration (200"), bei der der genannte Raum (210, 211) die genannte Ebene unterbricht, um den Schnitt der genannten bestimmten Anzahl an Stäben (2) durch Aktivierung der Schneidelemente (22) durchzuführen.

11. Vorrichtung nach Anspruch 10, **gekennzeichnet dadurch, dass** der genannte Körper (200) der genannten Schneidvorrichtung (160) schwenkbar auf der genannten orthogonalen Ebene zwischen der genannten inaktiven Konfiguration (200') oder aktiven Konfiguration (200") montiert ist.

12. Vorrichtung nach Anspruch 10, **gekennzeichnet dadurch, dass** der genannte Körper des genannten Schneidelements (161) beweglich mit einer Schaltbewegung zwischen genannter inaktiver Konfiguration, zurückgezogen von genannter Stützebene für die genannten Stäbe (2), und genannter aktiver Konfiguration, eingeführt (161') in die genannte Stützebene in Wechselwirkung mit der genannten bestimmten Anzahl an zu schneidenden Stäben (2), ist.

13. Anlage zum Schnitt von Stäben bestehend aus mindestens einer Schneidvorrichtung nach einem der Ansprüche 6 bis 12, bestehend aus einem Lager (3) für die genannten Stäbe (2) angrenzend an der genannten Stütz- und Messlinie (15, 150), und einem weiteren Lager (80) für die genannten geschnittenen Stäbe (2'), angrenzend an der gegenüberliegende Seite der Stütz- und Messlinie (15, 150), in der Lage die genannten geschnittenen Stäbe (2') von der Stütz- und Messlinie (15, 150) aufzunehmen.

14. Anlage zum Schnitt von Stäben bestehend aus mindestens einer Schneidvorrichtung nach einem der Ansprüche 6 bis 12, bestehend aus einem Lager (3) für die genannten Stäbe (2), angrenzend an der genannten Stütz- und Messlinie (15, 150), und einer Faltvorrichtung, um die genannten geschnittenen Stäbe (2') zu falten, angrenzend an der gegenüberliegenden Seite der Stütz- und Messlinie (15, 150), in der Lage die genannten, geschnittenen Stäbe (2') von der Stütz- und Messlinie (15, 150) aufzunehmen.

## Revendications

1. Méthode pour couper des barres comprenant les étapes consistant à :
a1. prédisposer une ligne de support et de mesure (15, 150) supportée par une structure de support (14) et former un plan de support pour des barres (2), le long d'un axe longitudinal ;
a2. prédisposer un dispositif de coupe (16, 160) portant des moyens de coupe (22), mobile longitudinalement à travers ladite structure (14) de ladite ligne de support et de mesure (15, 150) ;
a3. prédisposer un élément de butée (17) à une extrémité de ladite ligne de support et de mesure (15, 150) ;
b. amener un nombre déterminé de barres (2) sur ladite ligne de support et de mesure (15, 150), et disposer une extrémité dudit nombre déterminé de barres (2) amenées en butée contre ledit élément de butée (17) ;
c. manipuler longitudinalement, à travers ladite structure (14), ledit dispositif de coupe (16, 160) le long de ladite ligne de support et de mesure (15, 150) par rapport audit nombre déterminé de barres (2) amenées ;
d. arrêter ledit dispositif de coupe (16, 160) à l'intérieur de ladite ligne de support et de mesure (15, 150), dans une position relative audit élément de butée (17), correspondant à une mesure préétablie pour ledit nombre déterminé de barres (2) à couper ;
e. actionner lesdits moyens de coupe (22) portés par ledit dispositif de coupe (16, 160) dans ladite position relative, pour effectuer la coupe dudit nombre déterminé de barres (2) à ladite mesure prédéfinie ;
f. éventuellement répéter les étapes c. - e. jusqu'à la fin du cycle de coupe, ladite méthode étant **caractérisée en ce qu'**elle comprend les étapes supplémentaires consistant à :
a4. prédisposer des moyens de support (19) le long de ladite ligne de support et de mesure (15, 150) qui peuvent être sélectivement actionnés entre une position de support active pour ledit nombre déterminé de barres (2), substantiellement horizontale et une position inactive (19") espacée par rapport à ladite ligne (15, 150), aptes à libérer le passage pour l'insertion dudit dispositif de coupe (16, 160) sur ledit nombre déterminé de barres (2) à couper ;
c1. actionner sélectivement lesdits moyens de support (19) dans ladite position inactive (19") pour permettre le positionnement dudit dispositif de coupe (16, 160) le long de ladite ligne de support et de mesure (15, 150).

2. Méthode selon la revendication 1, **caractérisée en ce que** l'étape consistant à c. manipuler longitudinalement, à travers ladite structure (14), ledit dispositif de coupe (16, 160) se produit le long de pistes longitudinales associées à ladite structure de support (14), substantiellement entre une extrémité et l'autre de ladite ligne de support et de mesure (15, 150).

3. Méthode selon la revendication 1 ou 2, **caractérisée en ce qu'**elle comprend l'étape supplémentaire consistant à e1. transférer latéralement ledit nombre déterminé de barres (2') coupées vers ladite ligne de support et de mesure (15).

4. Méthode selon la revendication 3, **caractérisée en ce que** l'étape consistant à e1. transférer latéralement ledit nombre déterminé de barres (2') coupées se produit en actionnant au moins une partie desdits moyens de support (19) dans une position de décharge (19'), inclinée par rapport à ladite position de support (19).

5. Méthode selon la revendication 3 ou 4, **caractérisée en ce qu'**elle comprend l'étape supplémentaire consistant à :
a5. prédisposer une station de pliage (4) à une extrémité de ladite ligne de support et de mesure (15, 150) et
g. transférer ledit nombre déterminé de barres (2') coupées à ladite station de pliage (4) et
h. effectuer le pliage dudit nombre déterminé de barres (2') coupées à ladite station de pliage (4).

6. Appareil pour couper des barres (2) comprenant une ligne de support et de mesure (15, 150) supportée par une structure de support (14) et formant un plan de support pour lesdites barres (2) selon un axe longitudinal, comprenant un élément de butée (17) disposé à une extrémité de ladite ligne de support et de mesure (15, 150), apte à effectuer l'alignement réciproque d'un nombre déterminé de barres (2) et à servir de référence pour mesurer ledit nombre déterminé de barres (2) à couper, et un dispositif de coupe (16, 160) portant des moyens de coupe (22) mobiles longitudinalement à travers ladite structure de support (14) le long de ladite ligne de support et de mesure (15, 150) pour effectuer ladite coupe dudit nombre déterminé de barres (2) à l'intérieur de ladite ligne de support et de mesure (15, 150), dans une position relative audit élément de butée (17), correspondant à une mesure prédéfinie; ledit dispositif de coupe (16, 160) étant monté sur un chariot mobile actionné le long de pistes longitudinales substantiellement entre une extrémité et l'autre de ladite ligne de support et de mesure (15, 150); ledit appareil étant **caractérisé en ce que** ladite ligne de support et de mesure (15, 150) comprend des moyens de support (19) qui peuvent être sélectivement actionnés entre une position de support substantiellement horizontale (19) et une position inactive (19") espacée de ladite ligne de support et de mesure (15, 150), apte à libérer au moins temporairement le passage au niveau de ladite même ligne de support et de mesure (15, 150) pour l'insertion dudit dispositif de coupe (16, 160).

7. Appareil selon la revendication 6, **caractérisé en ce que** lesdits moyens de support (19) peuvent être sélectivement actionnés dans une position de déchargement soulevée (19'), inclinée par rapport à ladite position de support (19), pour décharger le nombre déterminé de barres (2') coupées latéralement à ladite ligne de support et de mesure (15, 150).

8. Appareil selon la revendication 6 ou 7, **caractérisé en ce que** lesdits moyens de support (19) comprennent des palettes inclinables par rapport à ladite structure de support (14) de ladite ligne de support et de mesure (15, 150), lesdits palettes portant des moyens de roulement du type à rouleaux libres ou motorisés.

9. Appareil selon l'une des revendications de 6 à 8, **caractérisé en ce que** ledit dispositif de coupe (16) mobile comprend un corps (20) comprenant une chambre d'insertion (21) au niveau de laquelle lesdits moyens de coupe (22) peuvent être actionnés pour la coupe dudit nombre déterminé de barres (2), ladite chambre (21) étant transversale à ladite ligne de support et de mesure (15) et apte à intercepter les sections dudit nombre déterminé de barres (2) prédisposées longitudinalement sur ladite ligne de support et de mesure (15).

10. Appareil selon l'une des revendications de 6 à 8, **caractérisé en ce que** ledit dispositif de coupe (160, 161) comprend un corps (200) comportant une chambre (210, 211) pour l'insertion dudit nombre déterminé de barres (2), ayant un profil ouvert, dans lequel fonctionnent lesdits moyens de coupe (22), ledit corps (200) étant également mobile sur un plan substantiellement orthogonal par rapport à ladite ligne de support et de mesure (150), entre une configuration inactive (200') à laquelle ladite chambre (210, 211) est espacée dudit plan de support pour lesdites barres (2) définies par ladite ligne de support et de mesure (150) et une configuration active (200") à laquelle ladite chambre (210, 211) intercepte ledit plan, pour effectuer la coupe dudit nombre déterminé de barres (2) au moyen de l'activation desdits moyens de coupe (22).

11. Appareil selon la revendication 10, **caractérisé en ce que** ledit corps (200) dudit dispositif de coupe (160) est monté inclinable dans ledit plan orthogonal entre ladite configuration inactive (200') et ladite configuration active (200").

12. Appareil selon la revendication 10, **caractérisé en ce que** ledit corps dudit dispositif de coupe (161) est mobile avec un mouvement de décalage entre ladite configuration inactive retirée dudit plan de support pour lesdites barres (2) et ladite configuration active, inséré (161') sur ledit plan d'interaction de support sur ledit nombre déterminé de barres (2) à couper.

13. Équipement pour couper de barres comprenant au moins un appareil de coupe selon l'une des revendications de 6 à 12, comprenant un espace de stockage (3) pour lesdites barres (2) adjacent à ladite ligne de support et de mesure (15, 150) et un espace de stockage (80) supplémentaire pour lesdites barres (2') coupées, adjacent, du côté opposé, à ladite ligne de support et de mesure (15, 150), apte à recevoir lesdites barres (2') coupées de ladite ligne de support et de mesure (15, 150).

14. Équipement pour couper des barres comprenant au moins un appareil de coupe selon l'une des revendications de 6 à 12, comprenant un espace de stockage (3) pour lesdites barres (2) adjacent à ladite ligne de support et de mesure (15, 150), et un appareil de pliage (4) pour plier les barres (2') coupées, adjacent, du côté opposé, à ladite ligne de mesure et de support (15, 150), apte à recevoir lesdites barres (2') coupées de ladite ligne de support et de mesure (15, 150).
